# EUROPÄISCHE PATENTSCHRIFT

(11) **EP 0 638 241 B1**
(45) Veröffentlichungstag und Bekanntmachung des Hinweises auf die Patenterteilung: **18.12.2002**
(21) Anmeldenummer: 94111960.4
(22) Anmeldetag: 01.08.1994
(51) Int. Cl.: A22C 13/00, C08L 1/06

(54) **Nahrungsmittelhülle auf Cellulosebasis mit verbesserten Reifeeigenschaften**
Food casing based on cellulose having improved ripening properties
Enveloppe alimentaire à base de cellulose possédant des propriétés de maturation améliorées

(30) Priorität: 12.08.1993 DE 4327020
(43) Veröffentlichungstag der Anmeldung: 15.02.1995
(73) Patentinhaber: HOECHST AKTIENGESELLSCHAFT, 65926 Frankfurt am Main (DE)
(72) Erfinder: Hammer, Klaus-Dieter, Dr., D-55120 Mainz (DE); Siebrecht, Manfred, Dr., D-65207 Wiesbaden-Naurod (DE); Krams, Theo, D-65197 Wiesbaden (DE)
(74) Vertreter: Zounek, Nikolai, Dipl.-Ing.

(56) Entgegenhaltungen:
- EP-A- 0 088 308
- EP-A- 0 502 432
- DE-A- 3 409 746
- DE-A- 4 002 083
- FR-A- 1 546 629
- US-A- 3 674 523
- FALBE ET AL.: "römpp chemie lexikon", 01. Januar 1990, GEORG THIEME VERLAG, STUTTGART

## Beschreibung

Die Erfindung betrifft eine Nahrungsmittelhülle auf Cellulosehydratbasis und ihre Verwendung als Wursthülle.

Flächenförmige, insbesondere bahn- und blattförmige, sowie schlauchförmige Nahrungsmittelhüllen auf der Basis von Cellulosehydrat werden für gewöhnlich nach dem Viskoseverfahren hergestellt. Dabei wird eine als "Viskoselösung" bezeichnete alkalische Cellulosexanthogenat-Lösung durch eine ring- oder schlitzförmige Düse extrudiert, in saurer Lösung als Cellulosehydrat-Gel koaguliert und zu Cellulosehydrat regeneriert. Durch Verändern der Viskosezusammensetzung und Einarbeiten von Additiven lassen sich die Eigenschaften der Nahrungsmittelhülle variieren. Diese Veränderungen können sowohl an verstärkten als auch an unverstärkten Hüllen durchgeführt werden. Unverstärkte Cellulosehydrathüllen werden als Zellglasfolien bezeichnet und sind als ^{(R)}Cellophan bekannt. Indem eine oder beide Seiten eines bahn- oder schlauchförmigen Fasergerüstes mit einer Viskoselösung beschichtet, imprägniert und anschließend mit einer Koagulations- und Regenerierlösung behandelt werden, erhält man faserverstärkte Nahrungsmittelhüllen. Solche Hüllen werden besonders für natur- und schimmelgereifte Dauerwurst eingesetzt.

Nahrungsmittelhüllen erfüllen wichtige Funktionen bei der Herstellung, Reifung und Aufbewahrung der Wurst. Sie müssen geschmeidig, ausreichend dehnfähig und lange lagerfähig sein.

Die Geschmeidigkeit und Verarbeitungsfähigkeit der Hülle wird üblicherweise durch sekundäre Weichmacher, wie Glycerin, Glykol oder Polyglykol verbessert. Die sekundären Weichmacher sind nicht kovalent, sondern nur durch intermolekulare Kräfte an das Cellulosehydrat gebunden. Beim Wässern der Hülle vor dem Befüllen oder beim Brühen oder Kochen der Wurst werden sie praktisch vollständig herausgelöst. Die Folge davon ist ein Schrumpfen, Verdichten und Verspröden der Hülle nach dem Trocknen der Wurst. Durch das Schrumpfen kann der Innendruck der Wurst so weit ansteigen, daß sie platzt. Diese Erscheinungen sind auf eine Kristallisation des Cellulosehydrats zurückzuführen.

In der US-A 3 674 523 ist eine nach dem Viskoseverfahren hergestellte schlauchförmige Wursthülle offenbart. Bei der Herstellung der Hülle wird ein tierisches oder pflanzliches Öl oder ein Mineralöl in der Viskoselösung dispergiert, vorzugsweise mit Hilfe eines Lösemittels, das in der Viskoselösung löslich ist. Nach der Koagulation und Regenerierung ist das Öl in die Cellulosematrix der Hülle eingelagert. Durch den Ölzusatz wird die Hülle selbstschmierend, daneben weicher und flexibler.

Bekannt ist auch das Aufbringen einer Beschichtung auf die Innenseite einer schlauchfömigen Wursthülle auf der Basis von Cellulosehydrat (DE-A 34 09 746). Beschichtet wird mit einer Mischung oder einer Lösung aus einem wasserlöslichen Celluloseether und einem Vinylpyrrolidon/Vinylacetat-Copolymer oder einem Polyvinylpyrrolidon, das durch Zugabe eines aus einem Kondensationsprodukt des Kolophoniums mit Acrylsäure in Form eines alkalischen Salzes gebildeten Additivs modifiziert ist. Durch die Innenbeschichtung läßt sich die Wursthülle leichter vom Wurstbrät abschälen.

Um die Kristallisationsneigung zu vermindern, werden der Viskoselösung noch sogenannte "primäre" Weichmacher zugefügt, die eine permanente Weichmachung bewirken. Als primäre Weichmacher werden Verbindungen eingesetzt, die mit den Cellulosemolekülen reagieren, wie N-(C₉-C₂₄)Alkyl-N,N',N'-tris-hydroxymethyl-harnstoff oder ähnliche Verbindungen mit langen aliphatischen Kohlenstoffketten (US-A 4 002 712). Aber auch nicht-reaktive Verbindungen, wie Di- und Polyhydroxyverbindungen, die mit langkettigen aliphatischen Monocarbonsäuren verestert sind (DE-A 26 54 427 = US-A 4 253 879), oder Polymere auf Alkylenoxidbasis mit wenigstens einer N-Hydroxymethyl-carbamat-Gruppe (DE-A 26 54 417 = US-A 4 198 325) werden verwendet.

Die Wasserdurchlässigkeit der Wursthüllen läßt sich mit diesen Methoden jedoch kaum beeinflussen. Entscheidend für das Reifeverhalten und das Schimmelwachstum bei natur- und schimmelgereifter Dauerwurst ist eine möglichst geringe Wasserdurchlässigkeit bei den Cellulosehüllen. Die gleichmäßige Reifung von Dauerwurst verlangt eine langsame Abgabe von Wasser durch die Hülle während der ersten Tage.

Faserverstärkte Cellulosehüllen zeigen eine hohe Wasserdurchlässigkeit (etwa 90 bis 110 l Wasser pro Quadratmeter Hülle in 24 Stunden bei einem Druck von 40 bar). Damit hergestellte Würste werden deshalb in Reifekammern, in denen sich eine gleichbleibend hohe relative Luftfeuchtigkeit einhalten läßt, gereift. Zu geringe oder schwankende Luftfeuchtigkeit führt zu sogenannten Trockenrändern auf der Wurst. Die Ursache ist ein zu schnelles Austrocknen der Brätoberfläche in den ersten Tagen der Reifung. Der Trockenrand vermindert den weiteren Wasserverlust, so daß das Innere der Wurst auch nach der üblichen Reifezeit noch feucht ist.

Um die Wasserdurchlässigkeit zu vermindern, wurde versucht, die Cellulosehydrathülle zu verdichten, beispielsweise durch mehrfaches Trocknen der Hüllen oder durch den Einbau von Vernetzungsmitteln, wie cyclischen Harnstoffmethylolen (DE-A 22 46 829 = US-A 3 937 672).

Kollagenhüllen, d.h. Hüllen aus gehärtetem Eiweiβ, besitzen den erwünschten Quellwert und die geringe Wasserdurchlässigkeit (nur etwa 10 l Wasser pro Quadratmeter in 24 Stunden bei einem Druck von 40 bar). Mechanische Festigkeit, Zähigkeit und Kaliberkonstanz - wesentliche Kriterien für die Qualität von Wursthüllen - lassen jedoch zu wünschen übrig.

Ein weiteres Qualitätsmerkmal für Cellulosehydrathüllen ist deren Feuchtebilanz. So sollen die Hüllen möglichst viel Wasser aufnehmen können, d.h. einen hohen Quellwert aufweisen. Zur Bestimmung des Quellwertes wird die Hülle in Wasser eingeweicht und anhaftendes Wasser bei einer bestimmten Drehzahl abgeschleudert. Nach dem Wiegen wird das Hüllenmaterial vollständig getrocknet und nochmals gewogen. Die Gewichtsdifferenz, ausgedrückt in Prozent des Gewichts der trockenen Hülle ergibt den Quellwert. Ein Quellwert von 120 % bedeutet demnach, daß eine Hülle von 100 g Trockengewicht 120 g Wasser aufnimmt. Die Hüllen sollen das Wasser nur langsam wieder abgeben. Die Wasserdurchlässigkeit sagt nichts aus über die Menge an Wasser, die aufgenommen oder abgegeben werden kann. Die Permeation ist allein ein Maß für die Wasserdurchlässigkeit der Hülle, während die Feuchtebilanz das Wasseraufnahme und Wasserhaltevermögen charakterisiert. Eine gute Feuchtebilanz gewährleistet einen problemlosen Trocknungsprozeß, bei dem keine Versprödung oder übertrocknung der Hülle auftritt. Durch den Zusatz von Alginsäure oder deren Salzen zu der Viskoselösung läßt sich eine permanent weichgemachte Wursthülle mit verbessertem Quellwert erhalten (DE-A 40 02 083). Diese Wursthüllen kommen auch ohne Glycerin als sekundärem Weichmacher aus. Alginsäure bzw. Alginat lockert die Struktur des Cellulosehydrats auf, daher ist der Verdichtungsgrad des glycerinfreien Cellulosehydrats bei geringer Alginsäure- bzw. Alginat-Konzentration am höchsten, wobei die Mindestkonzentration bei 5 Gew.-%, bezogen auf das Gewicht der Cellulose, liegt. Diese Hüllen sind jedoch papierartig und knittern im trockenen Zustand oder bei geringen Feuchtegehalten. Dieser Nachteil läßt sich durch Erhöhen der Alginsäure-/Alginat-Konzentration vermindern. Dabei nimmt jedoch die Permeation zu, was zu verschlechterten Reifeeigenschaften der Würste führt.

Es bestand somit die Aufgabe, Nahrungsmittelhüllen zu entwickeln, die die positiven Eigenschaften von Cellulosehydrat- und Kollagenhüllen in sich vereinen. Sie sollten also möglichst wenig Wasser durchlassen und auch bei niedrigen Feuchtegehalten gut verarbeitbar sein, indem sie zäh und geschmeidig bleiben, aber den papierartigen, knittrigen Charakter im trockenen Zustand verlieren.

Gelöst wird die Aufgabe durch eine faserverstärkte Nahrungsmittelhülle auf Cellulosebasis, die dadurch gekennzeichnet ist, daß sie eingelagert in die Cellulosematrix 3 bis 25 Gew.-% an Alginsäure oder Alginat sowie 1 bis 20 Gew.-%, jeweils bezogen auf das Gewicht der Cellulose, an Fettaminen, Fettalkoholen oder deren Ethoxylaten oder Fettsäuresalzen enthält.

Unter der Bezeichnung "Öle" sollen hier pflanzliche Öle, wie Olivenöl und Rapsöl verstanden werden. Fettsäuresalze, wie Calcium-stearat und Calcium-oleat, Fettamine, Fettalkohole und deren Ethoxylate werden im Folgenden auch als "fettähnliche Verbindungen" bezeichnet. Diese Substanzen werden in die Cellulosehydrat-Matrix eingelagert und bewirken offenbar eine Verdichtung der Oberfläche der Cellulosehydrathülle, indem sie die Regenerierung in dem Fällungsbad verzögern. Dadurch wird die Wasserdurchlässigkeit (Permeation) verringert. Gleichzeitig haben die Substanzen auch eine weichmachende Wirkung. Der Gehalt an diesen Verbindungen beträgt vorzugsweise 2 bis 12 Gew.-%, wiederum bezogen auf das Gewicht der Cellulose.

Besonders geschmeidige und zähe Faserdärme werden erhalten, wenn die Hülle eingelagert in die Cellulosematrix 3 bis 25 Gew.-% an Alginsäure oder Alginat sowie 1 bis 20 Gew.-% an Fettaminen, Fettalkoholen oder deren Ethoxylaten, Fettsäuresalzen, Fetten oder Ölen und zusätzlich 0,5 bis 15 Gew.-%, bevorzugt 1 bis 5 Gew.-%, jeweils bezogen auf das Gewicht der Cellulose, eines Copolymers enthält mit 80 bis 20 mol-% Einheiten der Formel I und 20 bis 80 mol-% Einheiten der Formel II oder III 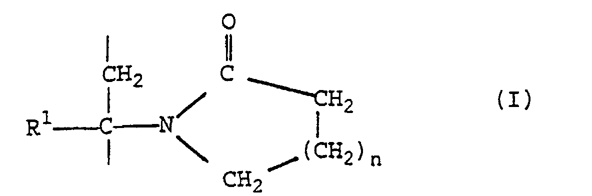 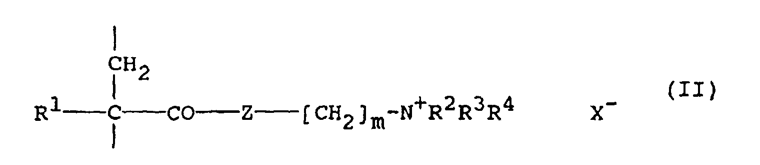 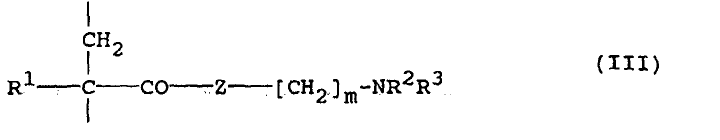 enthält, worin
- R¹ bis R⁴: gleich oder verschieden und Wasserstoff oder (C₁-C₆)Alkyl sind,
- Z: O oder N-R⁵ ist, wobei
- R⁵: Wasserstoff oder (C₁-C₆)Alkyl bedeutet,
- X⁻: Cl⁻, Br⁻, J⁻, (C₁-C₆)Alkyl-SO₂-O⁻, (C₁-C₆)-Alkyl-O-SO₂-O⁻, HSO₄⁻ oder 1/2 SO₄²⁻ ist,
- n: eine ganze Zahl von 1 bis 3, und
- m: eine ganze Zahl von 2 bis 6 darstellt.

Bevorzugt sind Copolymere mit quaternären Ammoniumgruppen, d.h. Copolymere mit Einheiten der Formeln I und II. Von diesen sind solche bevorzugt, in denen n = 1, m = 2, Z = O, R¹ bis R³ = CH₃, R⁴ = C₂H₅, und X⁻ = C₂H₅-O-SO₂-O⁻ bedeuten, d.h. Copolymere aus N-Vinyl-pyrrolidon und Ethyl-(2-methacryloyloxy-ethyl) -dimethyl-ammoniumethylsulfat. Die Copolymere sind in der Nahrungsmittelhülle bevorzugt in einem Anteil von 1 bis 5 Gew.-%, bezogen auf das Gewicht der Cellulose, enthalten.

Allgemein werden die Hüllen geschmeidiger und zäher und weniger wasserdurchlässig, je mehr von den genannten Additiven in der Cellulosematrix eingelagert sind. Dies war überraschend, nachdem bekannt war, daß Cellulosehydrathüllen, die allein mit Alginsäure/Alginat modifiziert sind, eine um so höhere Permeation zeigen, je mehr Alginsäure bzw. Alginat in ihnen enthalten ist.

Überraschenderweise kann auch bei nicht-faserverstärkten Nahrungsmittelhüllen auf Cellulosebasis schon mit einem geringen Anteil, beispielsweise 0,5 bis 5 Gew.-%, des vorgenannten Copolymers eine entscheidende Verbesserung der mechanischen Eigenschaften erzielt werden. Dieses Copolymer vermischt sich völlig homogen mit dem Cellulosematerial, obwohl dessen Molekulargewicht etwa 1.000.000 beträgt und damit zehnmal so groß ist wie das der Cellulose. Diese Hüllen enthalten mit 1 bis 20 Gew.-% den gleichen Anteil an Fetten, fettähnlichen Verbindungen oder Ölen. Fakultativ kann auch Alginsäure oder Alginat zugesetzt sein. Der Anteil an Alginsäure oder Alginat beträgt dann 3 bis 25 Gew.-%, bezogen auf das Gewicht der Cellulose.

Die erfindungsgemäßen faserverstärkten und nicht-faserverstärkten Nahrungsmittelhüllen, die insbesondere als Wursthüllen verwendet werden, sind auch ohne sekundäre Weichmacher sehr gut konfektionierbar und verarbeitbar. Bei einem sehr geringen Anteil des Copolymers (0,5 bis 1,5 Gew.-%) ist jedoch ein Zusatz von etwa 10 bis 11 Gew.-% an Glycerin, bezogen auf das Gewicht der Cellulose, vorteilhaft. Verglichen mit dem bisher üblichen Gehalt von 20 bis 22 Gew.-% bedeutet dies eine Halbierung.

Faserverstärkte Nahrungsmittelhüllen auf Cellulosebasis, die mit 5 Gew.-% Alginat und 6 Gew.-%, jeweils bezogen auf das Gewicht der Cellulose, Calcium-stearat modifiziert sind, weisen eine Permeation von 55 bis 60 l/m²*d bei 40 bar Druck auf. Wird die Cellulose mit 7,5 Gew.-% Alginat und 8 Gew.-% Calcium-stearat modifiziert, so beträgt der Wert noch 50 bis 55 l/m²*d. Fügt man noch 2 Gew.-% eines Copolymers aus N-Vinyl-pyrrolidon und Ethyl-(2-methacryloyloxy-ethyl) -dimethyl-ammonium-ethylsulfat zu den 7,5 Gew.-% Alginat und den 8 Gew.-% Calcium-stearat hinzu, so sinkt die Permeation auf 40 bis 50 l/m²*d. Damit kommen sie den Kollagenhüllen in den Reifeeigenschaften schon sehr nahe. Der Schimmel wächst vergleichbar langsam und dicht wie auf Kollagenhüllen. Trockenränder werden nicht ausgebildet, so daß Haftung und Schälbarkeit der Hülle nicht beeinträchtigt sind. Auch nach dem Reifen der Würste ist die Hülle noch "kollagenähnlich".

Die Herstellung der erfindungsgemäßen Nahrungsmittelhüllen kann durch einfaches Zudosieren der genannten Additive zu der Viskoselösung und anschließendes Extrudieren aus einer ring- oder schlitzförmigen Düse, wie bereits in der Einleitung beschrieben, erfolgen. Faserverstärkte Hüllen können aus einem Fasermaterial erhalten werden, das ein- oder beidseitig mit der Viskoselösung beschichtet ist.

### Beispiel 1

Ein 17 g-Hanffaserpapier wurde zu einem Schlauch mit einem Durchmesser von 55 mm (Kaliber 55) geformt und innen und außen mit einem Gemisch aus

| | |
|---|---|
| 197 l/h | Viskose und |
| 28,8 l/h | einer Lösung aus |
| | 23 l einer 4%igen wäßrigen Alginatlösung und |
| | 2 l einer 50%igen wäßrigen Calciumstearat-Dispersion (^{(R)}Lubranil CA) |

beschichtet. Bezogen auf das Gewicht der Cellulose beträgt der Gehalt an Alginat 7,5 Gew.-% und der Gehalt an Calciumstearat 6,0 Gew.-%. Der Schlauch passierte dann die üblichen Spinn-, Fäll- und Waschkufen. Vor dem Eintritt in den Trockner wurde der Gelschlauch mit der üblichen Imprägnierlösung behandelt, mit Luft auf den vorgesehenen Durchmesser aufgeblasen und bis auf eine Restfeuchte von 12 bis 14 Gew.-% getrocknet.

Das Gewicht der fertigen Wursthülle lag bei 80,6 g/m², der Quellwert bei 137 % und die Permeation bei 55 l/m²*d.

Die faserverstärkte Cellulosehülle wurde gerafft und dann mit einer automatischen Vorrichtung mit dem Dauerwurstbrät gefüllt. Reifeverlauf und Schimmelbewuchs waren normal, Trockenränder bildeten sich nicht. Die Schälbarkeit war ebenfalls normal.

### Beispiel 2

Ein 17 g-Hanffaserpapier wurde zu einem Schlauch vom Kaliber 55 geformt und innen und außen mit einem Gemisch aus

| | | |
|---|---|---|
| 197 l/h | Viskose und | |
| 19 l/h | einer Lösung aus | |
| | 23,2 l | einer 4%igen wäßrigen Alginatlösung, |
| | 2,6 l | einer 50%igen wäßrigen Calciumstearat-Lösung und |
| | 4,26 l | einer 10%igen wäßrigen Lösung eines Copolymers aus N-Vinyl-pyrrolidon und Ethyl-(2-methacryloyloxy-ethyl)-dimethyl-ammonium-ethylsulfat, M_{W} ≈ 1.000.000 (^{(R)}Gafquat 755N) |

beschichtet. Bezogen auf das Gewicht der Cellulose liegt der Anteil an Alginat bei 5 Gew.-%, der an Caiciumstearat bei 6 Gew.-% und des Copolymers bei 2 Gew.-%.

Der Schlauch wurde dann wie im Beispiel 1 beschrieben weiterverarbeitet.

Das Gewicht des fertigen Materials lag bei 78 g/m², der Quellwert bei 142 % und die Permeation bei 40 l/m²*d.

In Reifeverlauf und Schimmelbewuchs zeigte sich kein Unterschied zu Kollagenhüllen. Auch unter ungünstigen Bedingungen wurde kein Trockenrand ausgebildet. Die Schälbarkeit war normal.

### Beispiel 3

Ein 17 g-Hanffaserpapier wurde zu einem Schlauch vom Kaliber 55 geformt und innen und außen mit einem Gemisch aus

| | | |
|---|---|---|
| 197 l/h | Viskose und | |
| 19 l/h | einer Lösung aus | |
| | 41,1 l | einer 4%igen wäßrigen Alginatlösung und |
| | 3,9 l | einer 50%igen wäßrigen Calcium-stearatlösung |

beschichtet, so daß der Gehalt an Alginat bei 5 Gew.-% und der an Calciumstearat bei 8 Gew.-%, jeweils bezogen auf das Gewicht der Cellulose, lag. Es wird dann wie im Beispiel 1 beschrieben weiterverarbeitet.

Die fertige Nahrungsmittelhülle hatte ein Gewicht von 82 g/m², der Quellwert betrug 136 % und die Permeation 48 l/m²*d.

Reifeverlauf, Schimmelwachstum und Schälbarkeit waren normal und entsprachen in etwa dem von Kollagenhüllen. Eine Trockenrandbildung trat nicht auf.

### Beispiel 4

Ein 17 g-Hanffaserpapier wurde zu einem Schlauch mit einem Durchmesser von 60 mm (= Kaliber 60) geformt und innen und außen mit einem Gemisch aus

| | | |
|---|---|---|
| 211 l/h | Viskose und | |
| 21 l/h | einer Lösung aus | |
| | 20,00 l | einer 4%igen wäßrigen Alginatlösung, |
| | 1,12 l | einer 50%igen wäßrigen Calciumstearat-Dispersion und |
| | 0,28 l | Olivenöl |

beschichtet, so daß der Gehalt an Alginat 5 Gew.-%, der Gehalt an Calciumstearat 3 Gew.-% und der Gehalt an Olivenöl 1,3 Gew.-% betrug. Anschließend wurde der Schlauch wieder wie im Beispiel 1 beschrieben weiterverarbeitet.

Das Gewicht der Nahrungsmittelhülle betrug 80 g/m², der Quellwert 128 % und die Permeation 58 l/m²*d.

Die Hüllen ließen sich problemlos füllen, Reifeverlauf und Schälbarkeit waren normal.

## Patentansprüche

1. Faserverstärkte Nahrungsmittelhülle auf Cellulosebasis, die **dadurch gekennzeichnet ist, daß** sie eingelagert in die Cellulose-Matrix 3 bis 25 Gew.-% an Alginsäure oder Alginat sowie 1 bis 20 Gew.-%, jeweils bezogen auf das Gewicht der Cellulose, an Fettaminen, Fettalkoholen oder deren Ethoxylate oder Fettsäuresalzen enthält.

2. Faserverstärkte Nahrungsmittelhülle gemäß Anspruch 1, **dadurch gekennzeichnet, daß** der Gehalt an Fettaminen, Fettalkoholen oder deren Ethoxylaten oder Fettsäuresalzen 2 bis 12 Gew.-%, bezogen auf das Gewicht der Cellulose, beträgt.

3. Faserverstärkte Nahrungsmittelhülle auf Cellulosebasis, **dadurch gekennzeichnet, daß** sie eingelagert in die Cellulosematrix 3 bis 25 Gew.-% an Alginsäure oder Alginat sowie 1 bis 20 Gew.-% an Fettaminen, Fettalkoholen oder deren Ethoxylaten, Fettsäuresalzen, Fetten oder Ölen und zusätzlich 0,5 bis 15 Gew.-%, bevorzugt 1 bis 5 Gew.-%, jeweils bezogen auf das Gewicht der Cellulose, eines Copolymers mit 80 bis 20 mol-% Einheiten der Formel I und 20 bis 80 mol-% Einheiten der Formel II oder III 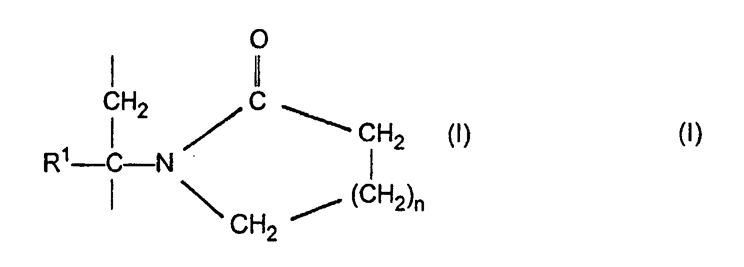 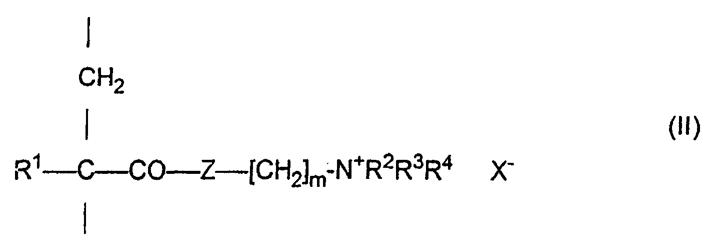 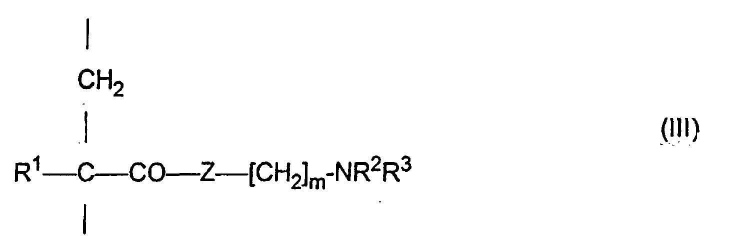 enthält, worin
R¹ bis R⁴ gleich oder verschieden und Wasserstoff oder (C₁-C₆)Alkyl sind,
Z O oder N-R⁵ ist, wobei
R⁵ Wasserstoff oder (C₁-C₆)Alkyl bedeutet,
X⁻ Cl⁻, Br⁻, J⁻, (C₁-C₆)Alkyl-SO₂-O⁻, (C₁-C₆)Alkyl-O-SO₂-O⁻, HSO₄⁻ oder 1/2 SO₄²⁻ ist,
n eine ganze Zahl von 1 bis 3, und
m eine ganze Zahl von 2 bis 6 darstellt.

4. Faserverstärkte Nahrungsmittelhülle gemäß Anspruch 3, **dadurch gekennzeichnet, daß** das Copolymer ein quaternisiertes Copolymer ist und Einheiten der Formeln I und II enthält.

5. Faserverstärkte Nahrungsmittelhülle gemäß Anspruch 4, **dadurch gekennzeichnet, daß** n = 1, m = 2, Z = O, R¹ bis R³ = CH₃, R⁴ = C₂H₅, und X⁻ = C₂H₅-O-SO₂-O⁻ ist.

6. Nicht-faserverstärkte Nahrungsmittelhülle auf Cellulosebasis, die **dadurch gekennzeichnet ist, daß** sie eingelagert in die Cellulosematrix 1 bis 20 Gew.-% an Fettaminen, Fettalkoholen oder deren Ethoxylaten, Fettsäuresalzen, Fetten oder Ölen sowie 0,5 bis 15 Gew.-%, jeweils bezogen auf das Gewicht der Cellulose, eines Copolymers mit 80 bis 20 mol-% Einheiten der im Anspruch 4 genannten Formel I und 20 bis 80 mol-% Einheiten der Formel II oder III enthält.

7. Nicht-faserverstärkte Nahrungsmittelhülle gemäß Anspruch 6, **dadurch gekennzeichnet, daß** sie zusätzlich mit 3 bis 25 Gew.-% an Alginsäure oder Alginat, bezogen auf das Gewicht der Cellulose, modifiziert ist.

8. Verwendung der Nahrungsmittelhüllen gemäß Anspruch 1 bis 7 als Wursthüllen.

## Claims

1. A fiber-reinforced cellulose-based food casing, wherein its cellulose matrix contains 3 to 25% by weight of alginic acid or alginate and 1 to 20% by weight of fatty amines, fatty alcohols or ethoxylates of fatty alcohols, or salts of fatty acids, based on the weight of cellulose in each case.

2. The fiber-reinforced food casing as claimed in claim 1, wherein the content of fatty amines, fatty alcohols or ethoxylates of fatty alcohols, or salts of fatty acids is 2 to 12 % by weight, based on the weight of the cellulose.

3. The fiber-reinforced cellulose-based food casing wherein its cellulose matrix contains 3 to 25% by weight of alginic acid or alginate and 1 to 20% by weight of fatty amines, fatty alcohols or ethoxylates of fatty alcohols, or salts of fatty acids, fats or oils, and additionally 0.5 to 15% by weight, preferably 1 to 5% by weight, based on the weight of the cellulose in each case, of a copolymer containing 80 to 20 mol% of units of the formula I and 20 to 80 mol% of units of the formula II or III 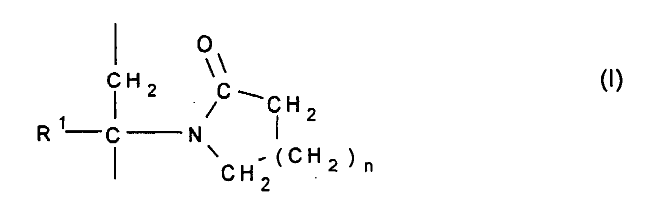 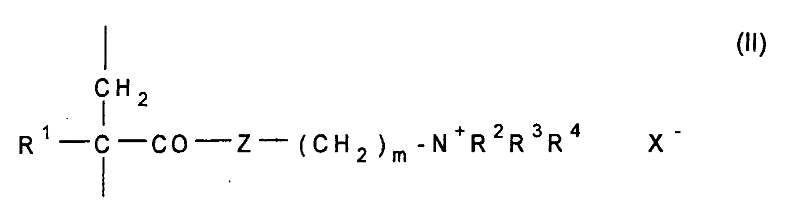 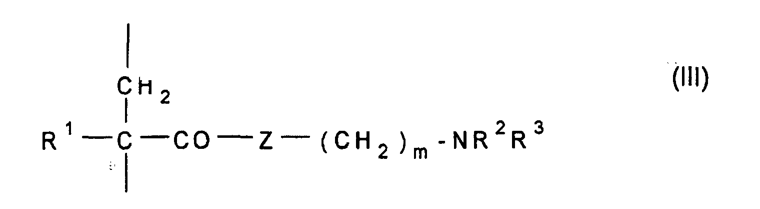 in which
R¹ to R⁴ are identical or different and are hydrogen or (C₁-C₆)alkyl,
Z is O or N-R⁵,
R⁵ is hydrogen or (C₁-C₆)alkyl,
X⁻ is Cl⁻, Br⁻, I⁻, (C₁-C₆)alkyl-SO₂-O⁻, (C₁-C₆)alkyl-O-SO₂-O⁻, HSO₄⁻ or 1/2 SO₄²⁻,
n is an integer from 1 to 3 and
m is an integer from 2 to 6.

4. The fiber-reinforced food casing as claimed in claim 3, wherein the copolymer is a quatemized copolymer comprising units of the formulae I and II.

5. The fiber-reinforced food casing as claimed in claim 4, wherein n = 1, m = 2, Z = O, R¹ to R³ = CH₃, R⁴ = C₂H₅, and X⁻ = C₂H₅-O-SO₂-O⁻.

6. A non-fiber-reinforced cellulose-based food casing wherein its cellulose matrix contains 1 to 20% by weight of fatty amines, fatty alcohols or ethoxylates of fatty alcohols, salts of fatty acids, fats or oils, and 0.5 to 15% by weight, based on the weight of the cellulose in each case, as well as of a copolymer containing 80 to 20 mol% of units of the formula I and 20 to 80 mol% of units of the formula II or III as mentioned in claim 3.

7. The non-fiber-reinforced food casing as claimed in claim 6, wherein the casing is additionally modified with 3 to 25% by weight of alginic acid or alginate, based on the weight of the cellulose.

8. Use of the food casings as sausage casings as claimed in any of claims 1 to 7.

## Revendications

1. Enveloppe pour aliment à base de cellulose renforcée par des fibres **caractérisée en ce qu'**elle contient, dispersé dans la matrice de cellulose, 3 à 25 % en poids d'acide alginique ou d'un alginate ainsi que 1 à 20 % en poids, respectivement par rapport au poids de la cellulose, d'amines grasses, alcools gras ou leurs éthoxylates ou de sels d'acide gras.

2. Enveloppe pour aliment renforcée par des fibres selon la revendication 1, **caractérisée en ce que** la teneur en amines grasses, alcools gras ou leurs éthoxylates ou en sels d'acide gras est de 2 à 12 % en poids par rapport au poids de la cellulose.

3. Enveloppe pour aliment à base de cellulose renforcée par des fibres, **caractérisée en ce qu'**elle contient, dispersé dans la matrice de cellulose, 3 à 25 % en poids d'acide alginique, d'alginate ainsi que 1 à 20 % en poids d'amines grasses, d'alcools gras ou leurs éthoxylates, de sels d'acide gras, d'huiles, ou de graisses et en outre 0,5 à 15 % en poids, de préférence 1 à 5% en poids, respectivement par rapport au poids de la cellulose, d'un copolymère contenant 80 à 20 % mol d'unités de formule I et 20 à 80 % mol d'unités de formule II ou III, 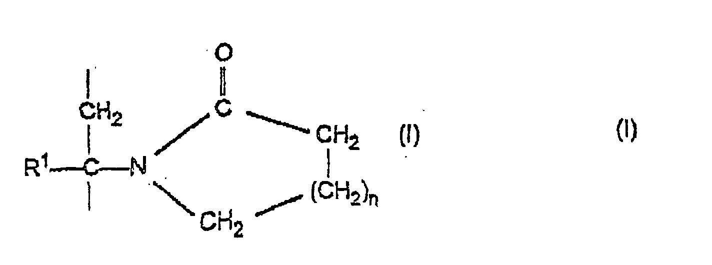 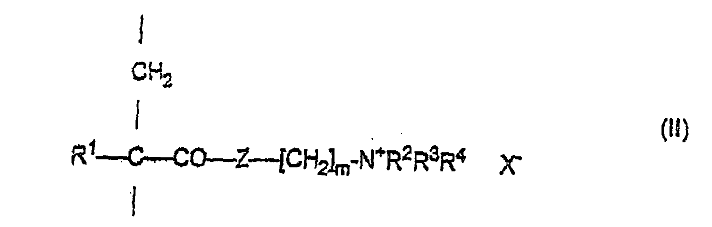 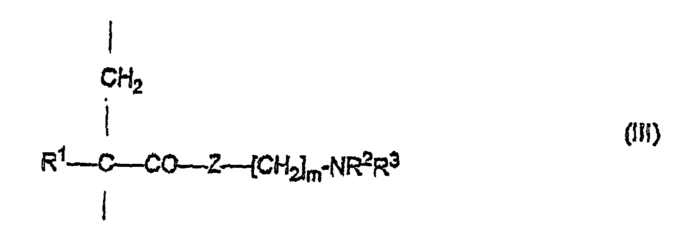 dans lesquelles
R¹ à R⁴ sont identiques ou différents et représentent un hydrogène ou un alkyle en C₁ à C₆
Z est O ou N-R⁵,
R⁵ représentant hydrogène ou un alkyle en C₁ à C₆
X⁻ représente Cl⁻, Br^{-,} J⁻, (C₁-C₆)alkyl-SO₂-O⁻, (C₁-C₆)alkyl-O-SO₂-O⁻,HSO₄⁻ ou 1/2 SO₄²⁻,
n est un nombre entier de 1 à 3, et
m est un nombre entier de 2 à 6.

4. Enveloppe pour aliment renforcée par des fibres selon la revendication 3, **caractérisée en ce que** le copolymère est un copolymère quaternisé et contient des unités de formule I et II.

5. Enveloppe pour aliment renforcée par des fibres selon la revendication 4, **caractérisée en ce que** n=1, m=2, Z=O, R¹ à R³ = CH₃, R⁴ = C₂H₅, et X⁻ = C₂H₅-O-SO₂-O⁻.

6. Enveloppe pour aliment à base de cellulose, non renforcée par des fibres, **caractérisée en ce qu'**elle contient, dispersé dans la matrice de cellulose 1 à 20 % en poids d'amines grasses, d'alcools gras ou de leurs éthoxylates, de sels d'acide gras, d'huiles, ou de graisses ainsi que 0,5 à 15 % en poids, respectivement par rapport au poids de la cellulose, d'un copolymère contenant 80 à 20 % mol d'unités de formule I mentionnée à la revendication 3 et 20 à 80 % mol d'unités de formule II ou III.

7. Enveloppe pour aliment non renforcée par des fibres selon la revendication 6, **caractérisée en ce qu'**elle est modifiée en outre par 3 à 25 % en poids par rapport au poids de la cellulose d'acide alginique ou d'alginate.

8. Utilisation des enveloppes pour aliment selon les revendications 1 à 7 comme gaine pour saucisses.
